# EUROPÄISCHE PATENTSCHRIFT

(11) **EP 0 580 974 B1**
(45) Veröffentlichungstag und Bekanntmachung des Hinweises auf die Patenterteilung: **19.03.1997**
(21) Anmeldenummer: 93108039.4
(22) Anmeldetag: 17.05.1993
(51) Int. Cl.: C04B 35/00, C30B 29/30, C01G 33/00, C01G 35/00

(54) **Metallniobate und/oder -tantalate, Verfahren zu ihrer Herstellung sowie deren Verwendung**
Metal niobates and/or tantalates, process for their preparation and their use
Niobates et/ou tantalates de métal, procédé de leur préparation et leur utilisation

(30) Priorität: 29.05.1992 DE 4217819
(43) Veröffentlichungstag der Anmeldung: 02.02.1994
(73) Patentinhaber: H.C. Starck GmbH & Co. KG, D-38642 Goslar (DE)
(72) Erfinder: Reichert, Karlheinz, Dr., W-3343 Hornburg (DE); Poth, Stefan, Dipl.-Ing., W-3344 Achim (DE); Sulkowski, Udo, W-3387 Vienenburg (DE)
(74) Vertreter: Steiling, Lothar, Dr.

(56) Entgegenhaltungen:
- EP-A- 0 376 508
- EP-A- 0 428 387

## Beschreibung

Die vorliegende Erfindung betrifft ein Verfahren zur Herstellung phasenreiner kristalliner Metallniobate und/oder -tantalate der allgemeinen Zusammensetzung Me(II)A₂O₆ bzw. Me(III)AO₄, worin A = Nb und/oder Ta und Me = Mg, Fe, Co, Ni, Cr, Mn, Cd, Cu und/oder Zn ist.

Metallniobate (MeNb₂O₆ bzw. MeNbO₄) und Metalltantalate (MeTa₂O₆ bzw. MeTaO₄, Me = Fe, Co, Ni, Cr, Mn, Cd, Cu, Zn) dienen u.a. als Ausgangsstoffe für die Herstellung von komplexen Perowskiten (z.B. PbAₓNb₁₋ₓO₃, PbAₓTa₁₋ₓO₃), die als Werkstoffe für die Elektrokeramik eingesetzt werden. Für die Synthese von metallniobaten und -tantalaten sind keramische Verfahren bekannt, insbesondere das Mischen von Metalloxiden mit anschließender Feststoffreaktion bei mindestens 1000°C. Bei diesem keramischen Verfahren, welches in J. Am. Ceram. Soc. 71 (5), C-250-C-251 (1988) beschrieben wird, müssen die Oxide über einen längeren Zeitraum homogenisiert werden.

In der Regel wird dieser Verfahrensschritt durch Naßmahlung in Kugelmühlen über einen Zeitraum bis zu 24 Stunden durchgeführt. Naturgemäß wird dabei das Oxid-Gemisch wegen Abrieb der Mahlkörper stark durch Fremdelemente kontaminiert. Bei der Verwendung von Keramikmahlkörpern bestehen diese Verunreinigungen vor allem aus den Elementen Zr, Al und Si. Da man bei diesem Verfahrensschritt noch keine optimale Homogenisierung erreicht, muß das getrocknete Gemisch mehrere Stunden lang bei 1 000°C kalziniert werden.

Sowohl die hohe Kalzinationstemperatur als auch die lange Kalzinationszeit beeinflussen das Material nachteilig. Das damit verbundene starke Kornwachstum reduziert deutlich die spezifische Oberfläche und damit die Reaktivität des Produktes bei der Weiterverarbeitung zu Perowskiten. Da das Niobat oder Tantalat aus dem keramischen Verfahren relativ grobkörnig ist, ist es als Ausgangsmaterial für komplexe Perowskite nicht besonders geeignet.

Naßchemische Verfahren, wie z.B. die Hydrolyse eines Alkoxid-Gemisches [J. Am. Ceram. Soc. 72 (8) 1335-1337 (1989)] sowie die Copräzipitation der Komponenten aus einer alkoholischen Oxalsäurelösung (EP-A 294 991) sind den konventionellen Verfahren überlegen. Diese Verfahren erlauben die Tieftemperatursynthese der Niobate und -tantalate, weil der Homogenisierungsgrad der Komponenten schon erheblich besser ist. Der Vorteil der Alkoxid-Methode liegt vor allem darin, daß das erhaltene Hydrolyseprodukt bereits bei Kalzinationstemperaturen um 800°C in ein phasenreines Metallniobat bzw. -tantalat überführt werden kann. Die Alkoxid-Methode weist jedoch den Nachteil auf, daß Herstellung und Handhabung der stark hydrolyseempfindlichen Ausgangsprodukte schwierig sind.

Aus der EP-A 428 387 geht ein Verfahren zur Herstellung von Bleiniobaten hervor, wobei in aufwendiger Weise Niobsäuresol mit entsprechenden Bleiverbindungen vereinigt, gemischt, sprühgetrocknet und kalziniert wird.

Das naßchemische Verfahren unter Verwendung von Nioboxalat bzw. Tantaloxalat bringt ebenfalls ein Fällungsprodukt hervor, das bereits bei 800°C in ein Metallniobat überführt werden kann. Aufgrund der unterschiedlichen Löslichkeiten der Metalloxalate in einer alkoholischen Lösung besteht jedoch nicht die Möglichkeit einer gemeinsamen Fällung der Komponenten. Der eigentliche Nachteil dieser Methode liegt u. a. darin, daß sehr große Mengen Alkohol benötigt werden, um beide Komponenten quantitativ zu fällen. Ein weiterer Nachteil bei dem Oxalatverfahren liegt in dem stark agglomerierten Produkt, das nach der Kalzination noch aufgemahlen werden muß.

Aufgabe dieser Erfindung ist somit die Bereitstellung eines Verfahrens von Metallniobaten und/oder -tantalaten, welches die beschriebenen Nachteile des Standes der Technik nicht aufweisen.

Gegenstand dieser Erfindung ist ein Verfahren zur Herstellung von Metallniobaten und/oder -tantalaten der allgemeinen Zusammensetzung Me(II)A₂O₆ bzw. Me(III)AO₄, worin A = Nb und/oder Ta und Me = Mg, Fe, Co, Ni, Cr, Mn, Cd, Cu und/oder Zn ist, durch Naßmischen entsprechender Metalloxide, Metallcarbonate, Metallhydroxidcarbonate und/oder Metallhydroxide und Niob- und/oder Tantalkomponenten, Trocknen und Kalzinieren, dadurch gekennzeichnet, daß die Niob- und/oder Tantalkomponenten in Form von Niob- und/oder Tantalhydroxid- und/oder -säure eingesetzt werden.

Nach dem erfindungsgemäßen Verfahren sind Produkte erhältlich, die eine Oberfläche, bestimmt nach der BET-N₂-1-Punkt-Methode, von 4 bis 30 m²/g aufweisen.

Die Phasenreinheit der erfindungsgemäß erhaltenen Produkte kann nach der Methode der Röntgenbeugungsanalyse (RBA) bestimmt werden, sie beträgt mehr als 99 %. Ebenfalls kann die Kristallinität der erfindungsgemäßen Produkte nach diesem Verfahren bestimmt werden. Hiernach weisen die erfindungsgemäßen Metallniobate und/oder -tantalate eine Halbwertsbreite des Peaks bei 30°C von weniger als 0,9° 2 Theta auf. Besonders bevorzugt ist das Verfahren zur Herstellung von Magnesiumniobaten und/oder -tantalaten.

Unter Verwendung von Niobhydroxid bzw. Tantalhydroxid lassen sich mit Hilfe eines Mischers ohne Maßprozeß sehr einfach homogene Stoffgemische herstellen. Dem Niobhydroxid bzw. Tantalhydroxid können entweder Metallcarbonate, Metallhydroxidcarbonate, Metallhydroxide oder Metalloxide zugemischt werden. Das Naßmischen kann besonders günstig im Bereich von 5 bis 90 min durchgeführt werden. Diese Metallkomponenten haben den Vorteil, daß das Material nicht zusätzlich mit Anionen verunreinigt wird. Vorteilhaft werden die homogenisierten Stoffgemische bei 400°C bis maximal 1200°C, bevorzugt 500°C bis 1000°C, 15 min bis 4 h lang kalziniert werden.

Macht man sich die Eigenschaft eines bei tiefen Temperaturen kalzinierten (800 bis 900°C) Magnesiumoxides als ein wasserbindendes Produkt zunutze, erhält man nach dem Mischvorgang mit feuchtem Niobhydroxid ein stark eingedicktes Stoffgemisch. Überraschenderweise läßt sich dieses Stoffgemisch nach dem Trocknen bei extrem niedrigen Temperaturen kalzinieren. Erstmals ist damit eine Tieftemperatur-Synthese für ein phasenreines Magnesiumniobat möglich. Eine Kalzinationstemperatur von 800°C war bisher nur bei Produkten möglich, die aus dem o.g. naßchemischen Alkoxid- bzw. Oxalatverfahren stammen.

Da die nach dem erfindungsgemäßen Verfahren erhältlichen Metallniobate und/oder -tantalate nach der Kalzination besonders feinkörnig anfallen, bedarf es keiner weiteren physikalischen Bearbeitung. Nach Auswertung von REM-Aufnahmen weist das Primärkorn eine Größe von nur 0,1 bis 0,5 µm auf.

Dieses erfindungsgemäße Verfahren bietet insbesondere folgende Vorteile:
Es erlaubt den Einsatz der billigen Ausgangsstoffe Niobhydroxid oder Tantalhydroxid, eine Kontamination mit Fremdelementen beim Mischen wird vermieden und man erreicht eine drastische Verkürzung der Produktionszeiten unter Erhalt besonders feinkörniger Endprodukte, weil nur relativ kurze Kalzinationszeiten und drastisch niedrige Kalzinationstemperaturen erforderlich sind.

Die Oberflächen der erfindungsgemäß hergestellten Produkte sind sehr groß, so daß sie als hochreaktive Ausgangsmaterialien für eine nachfolgende Synthese von komplexen Perowskiten bestens geeignet sind, also als Vorstoffe zur Herstellung von Blei-Perowskiten der allgemeinen Formel PbMeₓNb₁₋ₓO₃ bzw. PbMeₓTa₁₋ₓO₃.

Im folgenden wird die Erfindung beispielhaft erläutert, ohne daß hierin eine Einschränkung zu sehen ist.

### Beispiel 1

4 kg filterfeuchtes Niobhydroxid mit 24,4 % Nb-Inhalt wurden mit 2 1 Wasser verdünnt und mit 216 g MgO versetzt. 30 Minuten lang wurde diese Suspension in einem Thyssen-Henschel-Mischer mit 2000 Ulmin homogenisiert. Das eingedickte Material wurde bei 105°C getrocknet und anschließend bei unterschiedlichen Temperaturen kalziniert.

### Ergebnisse: der phasenreinen Magnesiumniobate

| Kalzination bei | spez. Oberfl. (BET) | Halbwertsbreite (° 2Theta) | Primärkorn (REM) |
|---|---|---|---|
| 500°C/1 h | 70,3 m²/g | 1,025 | 0,1-0,2 µm |
| 800°C/1 h | 34,3 m²/g | 0,780 | 0,1-0,2 µm |
| 1000°C/1 h | 7,0 m²/g | 0,21 | 0,1-0,2 µm |
| | | | |

| keramisches Verfahren: | | | |
|---|---|---|---|
| 1000°C/4 h | <2 m²/g | | 0,3-0,6 µm |

### Beispiel 2

4 kg Niobhydroxid mit 24,4 % Nb-Inhalt wurden mit 2 1 Wasser und 490 g Magnesium-Hydroxidcarbonat in einem Thyssen-Henschel-Mischer homogenisiert, das Substanzgemisch bei 105°C getrocknet und bei 1 000°C 1 Stunde lang kalziniert. Das phasenreine Produkt hatte eine Durchschnittskorngröße von 0,6 µm (FSSS) und eine spezifische Oberfläche von 6,5 m²/g (BET).

### Beispiel 3

150 g Magnesiumniobat aus Beispiel 2a) wurden mit346 g rotem Bleioxid (Pb₃O₄) und 200 ml Wasser in einer Planetenkugelmühle homogenisiert, anschließend getrocknet und 2 Stunden lang bei verschiedenen Temperaturen (s. nachfolgende Tabelle) kalziniert. Der Prozentgehalt an Perowskit (PMN) betrug 70 % bei einer Kalzinationstemperatur von 650°C, 23 % bei 700°C, 18 % bei 750°C und < 10 % bei 800°C.

Die Kalzinationstemperatur ist somit deutlich niedriger als im herkömmlichen Keramikverfahren.

Durch herkömmliche Axialverdichtung wurden aus einem PMN tablettenförmige Teilchen miteiner Durchmesser von 8 mm und einer Dicke von ca. 1 mm hergestllt und 2 Stunden lang bei 800°C kalziniert. Sie wurden 2 Stunden lang bei verschiedenen Temperaturen unter einer Bleioxidatmoshäre gesindert. Die theoretische Dichte betrug bei allen Proben > 95 %. Die RT-Dielektrizitätskonstanten (ε₂₅₎ wurden bei 10 kHz gemessen. Die Werte entsprechen fast denen eines PMN-Einkristalls.

| Tₛ | ε₂₅ |
|---|---|
| 900°C/2h | 9626 ± 229 |
| 1000°C/2h | 11016 ± 243 |
| 1100°C/2h | 10208 ± 215 |
| 1200°C/2h | 8478 ± 233 |
| Tₛ = Sintertemperatur ε₂₅ = Dielektrizitätskonstante (bei 25°C) | |

### Beispiel 4

3 kg filterfeuchtes Niobhydroxid mit 24,4 % Nb-Inhalt wurden mit 2 1 Wasser verdünnt und mit 724 g FeO(OH) (62 % Fe) versetzt. 30 Minuten lang wurde diese Suspension in einem Thyssen-Henschel-Mischer mit 2 000 Ulmin homogenisiert. Das Material wurde bei 105°C getrocknet und anschließend bei verschiedenen Temperaturen kalziniert.

### Ergebnisse:

| Kalzination bei | (BET) | (RBA)* | (REM) |
|---|---|---|---|
| 900°C/1 h | 9,20 m²/g | Nb₂O₅ <10% | 0,2-0,5 µm |
| 1000°C/1 h | 8,90 m²/g | Nb₂O₅ < 1% | 0,2-0,5 µm |

| | | | |
|---|---|---|---|
| * RBA = Röntgenbeugungsanalyse | | | |

### Beispiel 5

3 kg Niobhydroxid mit 24,4 % Nb-Inhalt wurden mit 2 1 Wasser und 1 060 g Nickelhydroxidcarbonat (21,8 % Ni) entsprechend Beispiel 1 homogenisiert, getrocknet und bei verschiedenen Temperaturen 1 bis 2 Stunden lang kalziniert.

### Ergebnisse:

| Kalzination bei | (BET) | (RBA)* |
|---|---|---|
| 800°C/2 h | >5 m²/g | Nb₂O₅ < 8% |
| 900°C/2 h | >5 m²/g | Nb₂O₅ < 6% |
| 1000°C/1 h | >5,0 m²/g | Nb₂O₅ < 1% |

Setzt man statt Nickelhydroxidcarbonat konzentrierte Nickelnitratlösung ein und verfährt analog zu Beispiel 2, dann erhält man bereits bei 800°C ein phasenreines Nickelniobat:

| Kalzination bei | (BET) | (RBA)* |
|---|---|---|
| 800°C/2 h | 11,5 m²/g | Nb₂O₅ < 1% |

### Beispiel 6

2 kg filterfeuchtes Niobhydroxid mit 24,45 % Nb-Inhalt wurden mit 2 1 Wasser und 326 g Zinkhydroxid entsprechend den Beispielen 1 und 2 homogenisiert, getrocknet und 2 Stunden lang bei 1000°C kalziniert. Hierbei wurde das entstandene Zinkniobat ebenfalls als phasenreines Produkt erhalten.

## Patentansprüche

1. Verfahren zur Herstellung von Metallniobaten und/oder -tantalaten der allgemeinen Zusammensetzung Me(II)A₂O₆ bzw. Me(III)AO₄, worin A = Nb und/oder Ta und Me = Mg, Fe, Co, Ni, Cr, Mn, Cd, Cu und/oder Zn ist, durch Naßmischen entsprechender Metalloxide, Metallcarbonate, Metallhydroxidcarbonate und/oder Metallhydroxide und Niob- und/oder Tantalkomponenten, Trocknen und Kalzinieren, dadurch gekennzeichnet, daß die Niob- und/oder Tantalkomponenten in Form von Niob- und/oder Tantalhydroxid- und/oder -säure eingesetzt werden.

2. Verfahren gemäß Anspruch 1, dadurch gekennzeichnet, daß das Naßmischen im Bereich von 5 bis 90 min durchgeführt wird.

3. Verfahren gemäß einem der Ansprüche 1 oder 2, dadurch gekennzeichnet, daß die Kalzination bei Temperaturen im Bereich von 400°C bis 1200°C, bevorzugt 500°C bis 1000°C, im Bereich von 15 min und 4 h durchgeführt wird.

## Claims

1. Process for the preparation of metal niobates and/or metal tantalates corresponding to the general formula Me(II)A₂O₆ or Me(III)AO₄, wherein A is Nb and/or Ta and Me is Mg, Fe, Co, Ni, Cr, Mn, Cd, Cu and/or Zn, by wet-mixing the corresponding metal oxides, metal carbonates, metal hydroxide carbonates and/or metal hydroxides and niobium and/or tantalum components, drying and calcining, characterised in that the niobium and/or tantalum components are used in the form of niobium hydroxide and/or tantalum hydroxide and/or niobic or tantalic acid.

2. Process according to claim 1, characterised in that the wet-mixing is carried out for a period ranging from 5 to 90 min.

3. Process according to one of claims 1 or 2, characterised in that the calcination is carried out at temperatures within the range of from 400°C to 1200°C, preferably 500°C to 1000°C, for a period ranging from 15 min to 4 h.

## Revendications

1. Procédé de préparation de niobates et/ou de tantalates métalliques de composition générale Me(II)A₂O₆ ou Me(III)AO₄ dans laquelle A représente Nb et/ou Ta et Me représente Mg, Fe, Co, Ni, Cr, Mn, Cd, Cu et/ou Zn par mélange par voie humide des oxydes métalliques, carbonates métalliques, carbonates métalliques basiques et/ou hydroxydes métalliques correspondants avec des composants apportant le niobium et/ou le tantale, séchage et calcination, caractérisé en ce que les composants apportant le niobium et/ou le tantale sont mis en oeuvre sous la forme d'hydroxyde de niobium et/ou de tantale et/ou d'acide niobique et/ou tantalique.

2. Procédé selon la revendication 1, caractérisé en ce que le mélange par voie humide dure de 5 à 90 min.

3. Procédé selon l'une des revendications 1 ou 2, caractérisé en ce que la calcination est réalisée à des températures dans l'intervalle de 400 à 1 200°C, de préférence de 500 à 1 000°C, en une durée de 15 min à 4 h.
